(19) Europäisches Patentamt
European Patent Office
Office européen des brevets

(11) **EP 3 402 632 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **17700261.5**

(22) Anmeldetag: **09.01.2017**

(51) Int Cl.:
**B25J 9/16** *(2006.01)*   **B25J 13/08** *(2006.01)*

(86) Internationale Anmeldenummer:
**PCT/EP2017/000022**

(87) Internationale Veröffentlichungsnummer:
**WO 2017/121635 (20.07.2017 Gazette 2017/29)**

(54) **BESTIMMUNG EINER ORIENTIERUNG EINES ROBOTERS RELATIV ZUR GRAVITATIONSRICHTUNG**

DETERMINING AN ORIENTATION OF A ROBOT RELATIVE TO THE DIRECTION OF GRAVITY

DÉTERMINATION D'UNE ORIENTATION D'UN ROBOT PAR RAPPORT À LA DIRECTION DE LA GRAVITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.01.2016 DE 102016000187**

(43) Veröffentlichungstag der Anmeldung:
**21.11.2018 Patentblatt 2018/47**

(73) Patentinhaber: **KUKA Deutschland GmbH**
**86165 Augsburg (DE)**

(72) Erfinder: **RADRICH, Helmuth**
**78758 Austin, Texas (US)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
EP-A2- 2 072 194        EP-A2- 2 639 020
EP-A2- 2 815 855        DE-A1- 10 150 225
US-A1- 2015 045 952

EP 3 402 632 B1

**Beschreibung**

Die vorliegende Erfindung betrifft ein Verfahren zur Bestimmung einer Orientierung eines Roboters relativ zu einer Gravitationsrichtung sowie eine Steuerung und ein Computerprogramm zur Durchführung eines Verfahrens.

Kinetische Modelle von Robotern, wie sie insbesondere in modellgestützen Bahnplanungen, Regelungen und dergleichen verwendet werden, berücksichtigen insbesondere den Einfluss von Gewichtskräften des Roboters, insbesondere gegebenenfalls eines robotergeführten Werkzeugs, insbesondere gegebenenfalls einer robotergeführten Nutzlast.

Die Übereinstimmung solcher Modelle mit der Realität und damit auch die Güte der auf ihnen basierenden Anwendungen hängt somit insbesondere von der Präzision ab, mit der die tatsächliche aktuelle Gravitationsrichtung im Modell berücksichtigt ist: ist der reale Roboter gegenüber einer im Modell angenommenen Ausrichtung verkippt aufgestellt bzw. weicht eine dem Modell zugrundeliegende Gravitationsrichtung von der tatsächlichen aktuellen Gravitationsrichtung ab, führt dies in der Regel zu Abweichungen in auf Basis dieses Modells ermittelten Größen, insbesondere Kräften.

Um die Güte eines solchen Modells und einer auf ihm basierenden Anwendung zu erhöhen, kann daher eine absolute bzw. bezüglich der Umgebung möglichst waag- bzw. lotrechte Ausrichtung des Roboters vorteilhaft sein.

Wird ein Modell eines werkzeugführenden Roboters, insbesondere Parameter wie Masse, Schwerpunkt und/oder Trägheitstensor eines vom Roboter geführten Werkzeugs, mittels des Roboters kalibriert, sollte die Orientierung des Roboters relativ zur Gravitationsrichtung bei Einsatz dieses kalibrierten Modells möglichst der Orientierung bei seiner Kalibrierung entsprechen, da andernfalls Abweichungen in den Orientierungen zu Abweichungen in auf Basis des kalibrierten Modells ermittelten Größen führen, insbesondere auch zu hierauf basierenden Prozessparametern von Applikationen. Denn Abweichungen zwischen der tatsächlichen Gravitationsrichtung und der dem Modell zugrundeliegenden Gravitationsrichtung bei der Kalibrierung werden bei Parametrierung von Applikationen des Roboters intrinsisch kompensiert, so dass auch an anderen Aufstellungsorten wieder die gleiche Orientierung vorliegen sollte, um diese intrinsische Kompensation auszugleichen.

Entsprechend kann zusätzlich oder alternativ zu einer absolut möglichst waag- bzw. lotrechten Ausrichtung des Roboters eine Wiederherstellung derjenigen Orientierung vorteilhaft sein, die bei Kalibrierung eines Modells des werkzeugführenden Roboters vorlag bzw. dem Modell zugrundeliegt.

Aus der EP 0 522 411 A1 ist ein Verfahren zum Kalibrieren eines Roboters bekannt, bei der auf Gliedern eines Roboterarms Wasserwaagen angeordnet und die Gelenke so kalibriert werden, dass die Glieder einen vorgegebenen Winkel mit der Gravitationsrichtung einschließen.

Aus der EP 2 639 020 A2 ist ein Verfahren zum Steuern eines Roboters bekannt, bei dem eine CPU jedes Mal, wenn ein Orientierungsparameter, der eine Gliedposition und -orientierung anzeigt, die durch einen redundanten Freiheitsgrad erlaubt ist, unter einer Zwangsbedingung einer Endeffektorposition und -orientierung sequentiell verändert wird, auf Basis von Trägheitskräften, Zentrifugal- oder Corioliskräften, Gravitationskräften, Reibungskräften und auf eine Gelenkachse aufgebrachten Aktuatorträgheitsdrehmomenten ein Lastdrehmoment als Zielwert berechnet. Die CPU erhält die Gliedposition und -orientierung, bei der das Verhältnis des Lastdrehmoments zu einem bewerteten Moment eines Drehaktuators, der für jedes Gelenk vorgesehen ist, minimiert wird, während der Orientierungsparameter verändert wird, und liefert einen Steuerwert, der zu einer Steigerung jedes Lastmoments führt, das erhalten wird, wenn das Verhältnis minimiert wird, an ein Steuerkommando, das an den Drehaktuators jedes Gelenks generiert wird, um die Endeffektorposition und - orientierung als Zielwerte zu erreichen.

Nach einem aus der EP 2 072 194 A2 bekannten Verfahren zur modellbasierten Regelung eines Manipulators, insbesondere eines Roboters wird eine Soll-Kraft eines Aktuators des Manipulators auf Basis eines Modells des Manipulators bestimmt und der Manipulator mit dieser Soll-Kraft durch den Aktuator beaufschlagt. Dabei wird eine vom Manipulator ausgeübte virtuelle Kraft auf Basis des Modells des Manipulators und eine vom Manipulator ausgeübte reale Kraft sowie die Differenz zwischen ausgeübter virtueller und realer Kraft bestimmt und diese mit einem Maximalgrenzwert verglichen. Nur falls der Vergleich ergibt, dass die Differenz kleiner als der Maximalgrenzwert ist, wird der Manipulator mit der auf Basis des Modells des Manipulators bestimmten Soll-Kraft beaufschlagt.

Nach der DE 101 50 225 A1 ist auf ein Werkstück ein Werkstück-Koordinatensystem und auf einen Roboter ein Roboter-Koordinatensystem bezogen, welches gegenüber einem gegebenen Referenz-Koordinatensystem eine Abweichung aufweist. Diese wird durch Koordinatenvergleich von mindestens drei Aufpunkten bezüglich des Roboter-Koordinatensystems einerseits und bezüglich des Referenz-Koordinatensystems andererseits ermittelt. Die Ergebnisse dieses Vergleichs werden entweder als "mathematische Korrektur" dazu herangezogen, um die auf das Roboter-Koordinatensystem bezogenen Koordinaten für jeden vom Roboterarm anzusteuernden Zielpunkt unter Berücksichtigung der Abweichung zu berechnen, oder die Ergebnisse des Vergleichs werden "mechanische Korrektur" dazu herangezogen, die Orientierung des Roboters bzw. diese sowie die Position des Roboters z. B. durch gezieltes Einwirken auf dessen Unterlage so zu beeinflussen, daß die Abweichung verringert, vorzugsweise minimiert wird.

Aufgabe der vorliegenden Erfindung ist es, den Betrieb eines Roboters zu verbessern.

Diese Aufgabe wird durch ein Verfahren mit den Merkmalen des Anspruchs 1 gelöst. Ansprüche 14, 15 stellen eine Steuerung und ein Computerprogramm zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zur Bestimmung einer Orientierung eines Roboters, insbesondere einer Roboterbasis, relativ zu einer Gravitationsrichtung, insbesondere einer tatsächlichen aktuellen Gravitationsrichtung oder einer Gravitationsrichtung, die einem, insbesondere an einem anderen Aufstellungsort kalibrierten, Modell zugrunde liegt bzw. bei Kalibrierung des Modells relativ zum Roboter vorlag, an einem Aufstellungsort oder an mehreren Aufstellungsorten des Roboters (jeweils für einen Aufstellungsort) die Schritte auf:

- Erfassen von Gelenkkräften des Roboters in einer oder mehreren Messposen an dem (jeweiligen) Aufstellungsorten des Roboters; und
- Ermitteln einer, insbesondere tatsächlichen aktuellen, Orientierung des Roboters, insbesondere der Roboterbasis, relativ zu dieser Gravitationsrichtung (an dem jeweiligen Aufstellungsort) auf Basis der erfassten Gelenkkräfte und eines Modells des Roboters.

Somit wird in einer Ausführung der Roboter selber bzw. seine erfassten Gelenkkräfte sozusagen als elektronische Wasserwaage verwendet, insbesondere als "absolute" Wasserwaage zur Bestimmung einer tatsächlichen aktuellen Gravitationsrichtung oder als "relative" Wasserwaage zur Wiederherstellung einer zuvor, insbesondere bei der Kalibrierung, vorliegenden Orientierung relativ zur tatsächlichen damaligen Gravitationsrichtung.

Der Roboter weist in einer Ausführung einen Roboterarm mit einer (proximalen Roboter)Basis und einem (distalen Werkzeug)Flansch auf, die durch ein oder mehrere, insbesondere wenigstens sechs, insbesondere wenigstens sieben, Gelenke, insbesondere Dreh- und/oder Schubgelenke, beweglich miteinander verbunden sind. In einer Ausführung weist der Roboter(arm), insbesondere elektrische, Antriebe zum Bewegen eines oder mehrerer der Gelenke auf.

Unter einer Orientierung relativ zu einer Gravitationsrichtung wird vorliegend insbesondere die (ein- oder zweidimensionale Winkel)Lage des Roboters, insbesondere seiner Basis und/oder eines roboterfesten, insbesondere roboter(arm)basisfesten, Bezugssystems, insbesondere einer (Bewegungs)Achse des Roboters und/oder einer (Bezugs)Achse oder (Bezugs)Ebene des Bezugssystems, relativ zu dieser Gravitationsrichtung verstanden.

Sie kann in einer Ausführung insbesondere als Abweichung zwischen dieser Gravitationsrichtung und der (Bewegungs- bzw. Bezugs)Achse des Roboters und/oder Bezugssystems, in einer anderen Ausführung als diese Gravitationsrichtung in einem roboterfesten, insbesondere roboter(arm)basisfesten, Bezugssystem ermittelt bzw. definiert sein bzw. werden.

Die Gelenkkräfte werden in einer Ausführung mittels Kraftsensoren an, insbesondere in, den Gelenken, insbesondere Antrieben, und/oder erfassten Leistungen der Antriebe erfasst. Allgemein werden unter Gelenkkräften insbesondere Kräfte, insbesondere Antriebs- und/oder Stützkräfte, verstanden, die zwei gelenkig miteinander verbundene Glieder des Roboters gegenseitig aufeinander ausüben, insbesondere in Richtung der bzw. um die Bewegungsachse bzw. im Freiheitsgrad des jeweiligen Gelenks.

Zur kompakteren Darstellung werden vorliegend auch antiparallele Kräftepaare bzw. Drehmomente verallgemeinernd als Kräfte bezeichnet, so dass Gelenkkräfte insbesondere auch Gelenk(dreh)momente, insbesondere um Drehachsen der Gelenke, sein können, Kraftsensoren entsprechend insbesondere auch Drehmomentsensoren. Eine Gelenkkraft kann entsprechend insbesondere ein Drehmoment um eine Drehachse sein, die zwei um diese Drehachse drehbar miteinander verbundene Glieder des Roboters gegenseitig aufeinander ausüben.

In einer Ausführung werden die Gelenkkräfte erfasst, ohne dass externe Kräfte von der Umgebung auf dem Roboter lasten bzw. ohne dass der Roboter - abgesehen von einer Befestigungsfläche - mit der Umgebung in Kontakt steht. Entsprechend ist das Modell in einer Ausführung ein Modell des (extern) belastungsfreien bzw. kontaktlosen Roboters.

Das (mathematische bzw. mechanische) Modell des Roboters bildet in einer Ausführung Koordinaten $q$ des Roboters, die von dessen Pose abhängen, insbesondere diese angeben bzw. bestimmen, insbesondere Gelenkkoordinaten oder Lage- und/oder Orientierungskoordinaten einer roboterfesten Referenz, insbesondere des TCPs, und Kräfte $\tau$, insbesondere Gelenkkräfte, Gewichts-, Trägheits-, Kreisel-, Reibungs- und/oder externe Kräfte, aufeinander ab.

Ein solches Modell wird vorliegend entsprechend als kinetisches Modell bezeichnet. In einer Ausführung beinhaltet das Modell neben statischen Kräften wie insbesondere Gewichtskräften auch dynamische Kräfte wie insbesondere Trägheits- und/oder Kreiselkräfte und/oder Zeitableitungen der Koordinaten, insbesondere Geschwindigkeiten, Beschleunigungen und/oder höhere Ableitungen. Ein solches Modell wird vorliegend entsprechend als dynamisches Modell bezeichnet.

Das Modell lässt sich in einer Ausführung allgemein in der fachüblichen Form

$$M\left(q, g_{Modell}\right)\ddot{q} + h\left(q, \dot{q}, g_{Modell}\right) = \tau_{Modell} \qquad (1)$$

mit der Massenmatrix $M(q, g_{Modell})$, den Geschwindigkeiten bzw. Beschleunigungen $\dot{q}, \ddot{q}$, den generalisierten Kräften $h(q, \dot{q}, g_{Modell})$, (dem Vektor) der Gravitationskraft bzw. -richtung) $g_{Modell}$ und Modell-Kräften, insbesondere Modell-Gelenkkräften $\tau_{Modell}$ angeben. Bei einem statischen kinetischen Modell können die Terme $\dot{q}, \ddot{q}$ entfallen bzw. gleich Null sein.

Vergleicht man die auf Basis des Modells ermittelten Modell-Gelenkkräfte $\tau_{Modell}$ mit den erfassten, tatsächlichen Gelenkkräften $\tau_{mess}$, so resultieren Abweichungen, insbesondere bei im Übrigen korrektem, insbesondere entsprechend kalibriertem, Modell bzw. Vernachlässigung anderer Modellungenauigkeiten bzw. -fehler wenigstens im Wesentlichen nur, aus der Abweichung zwischen der bzw. dem dem Modell zugrundeliegenden Gravitationsrichtung bzw. -vektor $g_{Modell}$ und der bzw. dem tatsächlichen aktuellen Gravitationsrichtung bzw. -vektor $g_{ist}$. Dabei ist zu beachten, dass die dem Modell zugrundeliegende Gravitationsrichtung $g_{Modell}$ relativ zum Roboter in entsprechende kinetische Parameter des Modells wie insbesondere Massen, Schwerpunktlagen und/oder Trägheitstensoren Eingang finden kann.

Entsprechend kann auf Basis dieser Abweichung zwischen den erfassten Gelenkkräften $\tau_{mess}$ und den auf Basis des Modells des Roboters ermittelten Modell-Gelenkkräften $\tau_{Modell}$, die üblicherweise zur Bestimmung von externen Kräften verwendet wird ($\tau_{extern} = \tau_{mess} - \tau_{Modell}$), die Abweichung zwischen der dem Modell zugrundeliegenden Gravitationsrichtung $g_{Modell}$ und der tatsächlichen aktuellen Gravitationsrichtung $g_{ist}$ und damit die Orientierung des Roboters relativ zu einer Gravitationsrichtung ermittelt werden:

$$\Delta g = g_{ist} - g_{Modell} = \Psi\left(\tau_{mess} - \underbrace{M(q, g_{Modell})\ddot{q} + h(q, \dot{q}, g_{Modell})}_{\tau_{Modell}}\right) \quad (2)$$

Dabei bezeichnet $\Psi$ eine Funktion, die die externen Kräfte auf die Orientierung bzw. eine entsprechende Korrekturgröße abbildet. Sie kann beispielsweise die Einheits- oder (inverse bzw. gegebenenfalls Pseudo)Jacobimatrix aufweisen, insbesondere sein.

Ist in einer Ausführung die dem Modell zugrundeliegende Gravitationsrichtung $g_{Modell}$ in einem roboterfesten, insbesondere roboter(arm)basisfesten, Bezugssystem vorgegeben bzw. bekannt, kann entsprechend aus Gleichung (2) insbesondere die Orientierung dieses Bezugssystems relativ zu der tatsächlichen aktuellen Gravitationsrichtung $g_{ist}$ ermittelt bzw. (durch Minimierung der Abweichung) dieses Bezugssystems absolut bzw. bezüglich der Umgebung waag- bzw. lotrecht ausgerichtet werden.

Gleichermaßen kann, indem die ermittelte (Orientierung relativ zu der) tatsächliche(n) aktuelle(n) Gravitationsrichtung $g_{ist}$ (wieder) an die dem Modell zugrundeliegende Orientierung bzw. Gravitationsrichtung $g_{Modell}$ angeglichen wird, diese dem Modell zugrundeliegende Orientierung, insbesondere diese Orientierung relativ zu der bei seiner Kalibrierung vorliegenden tatsächlichen Gravitationsrichtung, (wieder) hergestellt werden. In diesem Falle wird somit die Orientierung des Roboters relativ zu der dem Modell (bei seiner Kalibrierung) zugrundeliegenden Gravitationsrichtung (relativ zum Roboter) ermittelt.

Wie aus Gleichung (2) ersichtlich, kann die Orientierung des Roboters relativ zur Gravitationsrichtung in einer Ausführung insbesondere in Form einer Abweichung $\Delta g$ zwischen der, insbesondere tatsächlichen aktuellen, Gravitationsrichtung $g_{ist}$ und einer dem Modell zugrundeliegenden Gravitationsrichtung $g_{Modell}$ und/oder einer roboterfesten, insbesondere roboter(arm)basisfesten Bezugsachse ermittelt werden.

Gleichermaßen kann, wie ebenfalls aus Gleichung (2) ersichtlich, die Orientierung des Roboters relativ zur, insbesondere tatsächlichen aktuellen, Gravitationsrichtung $g_{ist}$ in einer Ausführung insbesondere in Form dieser Gravitationsrichtung selber in einem roboterfesten, insbesondere roboter(arm)basisfesten, Bezugssystem ermittelt werden:

$$\left(g_{ist} = \underbrace{\Psi\left(\tau_{mess} - \underbrace{M(q, g_{Modell})\ddot{q} + h(q, \dot{q}, g_{Modell})}_{\tau_{Modell}}\right) + g_{Modell}}_{\Psi'}\right) \quad (3).$$

Die Orientierung kann insbesondere in Form von ein oder zwei Winkeln um eine bzw. zwei vorgegebene, insbesondere roboterfeste, insbesondere roboter(arm)basisfeste, Achsen, insbesondere nachfolgend erläuterte Korrekturachsen, zwischen der Gravitationsrichtung und der dem Modell zugrundeliegenden Gravitationsrichtung $g_{Modell}$ bzw. roboter((arm)basis)festen Bezugsachse ermittelt bzw. ausgegeben werden. Gleichermaßen kann sie beispielsweise komponentenweise, insbesondere in einem roboter((arm)basis)festen Bezugssystem, ermittelt bzw. ausgegeben werden.

In einer Ausführung wird die Orientierung relativ zu einer bzw. der tatsächlichen aktuellen Gravitationsrichtung oder einer dem, insbesondere kalibrierten, Modell zugrundeliegenden bzw. bei der Kalibrierung vorliegenden Gravitationsrichtung (relativ zum Roboter) ermittelt und ausgegeben, insbesondere angezeigt, insbesondere ihre Größe und/oder Richtung.

Durch die Ermittlung der Orientierung relativ zur tatsächlichen aktuellen Gravitationsrichtung kann der Roboter sozusagen als "absolute" Wasserwaage genutzt und/oder absolut bzw. bzgl. der Umgebung waag- bzw. lotrecht ausgerichtet werden.

Durch die Ermittlung der Orientierung relativ zu der dem Modell zugrundeliegenden Gravitationsrichtung, die in einer Ausführung insbesondere die Gravitationsrichtung relativ zum Roboter, insbesondere einem roboterfesten, insbesondere roboter(arm)basisfesten, Bezugssystem (insbesondere des Modells) sein kann, die bei der Kalibrierung des Roboters vorlag, kann der Roboter sozusagen als "relative" Wasserwaage genutzt werden, um die dem Modell zugrundeliegende Orientierung bzw. Gravitationsrichtung relativ zum Roboter wieder herzustellen.

Die Orientierung kann in einer Weiterbildung in Form einer ein- oder mehrdimensionalen Korrekturgröße um eine oder zwei, insbesondere roboterfeste und/oder vorgegebene, insbesondere konstruktiv vorgegebene, Korrekturachsen ausgegeben werden, um die der Roboter, insbesondere seine Basis, in einer Weiterbildung zu kippen bzw. neigen ist, insbesondere kipp- bzw. neigbar gelagert ist, insbesondere durch Verstellen einer oder mehrerer nachfolgend erläuterter Stützen. Hierdurch kann vorteilhaft eine Ausrichtung des Roboters erleichtert werden.

In einer einfachen Ausführung kann beispielsweise für eine oder zwei Korrekturachsen (jeweils) die (Dreh)Richtung und/oder der (Dreh)Winkel angezeigt werden, in die bzw. um den der Roboter zu kippen ist, um eine Abweichung zwischen einer tatsächlichen aktuellen Gravitationsrichtung und einer dem Modell zugrundeliegenden Gravitationsrichtung zu minimieren.

Allgemein wird in einer Ausführung die Orientierung des Roboters in Form einer bzw. der ein- oder mehrdimensionalen Korrekturgröße ermittelt und ausgegeben, insbesondere angezeigt, bzw. wird eine bzw. die ein- oder mehrdimensionale Korrekturgröße ermittelt und ausgegeben, insbesondere angezeigt, die von der Abweichung zwischen den erfassten Gelenkkräften und auf Basis des Modells des Roboters ermittelten Modell-Gelenkkräften, insbesondere monoton, insbesondere linear, abhängt, sich insbesondere mit Reduzierung der Abweichung ebenfalls reduziert bzw. mit wachsender Abweichung ebenfalls wächst. In einer Weiterbildung hängt die Korrekturgröße von der Richtung und/oder dem Betrag ab, in die bzw. um den der Roboter zu kippen ist, um die Abweichung, insbesondere maximal, zu reduzieren, sie kann diese Richtung bzw. diesen Betrag insbesondere angeben.

Beispielsweise kann in einer Ausführung um zwei Korrekturachsen jeweils die Drehrichtung und/oder der Betrag angezeigt werden, in die bzw. um den der Roboter zu kippen ist, um die Abweichung zwischen den erfassten Gelenkkräften und auf Basis des Modells des Roboters ermittelten Modell-Gelenkkräften, insbesondere maximal, zu reduzieren. Gleichermaßen kann in einer Ausführung die Richtung, beispielsweise als Richtungspfeil oder Winkel, angezeigt werden, in die der Roboter zu kippen ist, um die Abweichung, insbesondere maximal, zu reduzieren. Zusätzlich oder alternativ in einer Ausführung, beispielsweise als Größe des Richtungspfeils, angezeigt werden, wie stark der Roboter in dieser Richtung zu kippen ist, um die Abweichung, insbesondere maximal, zu reduzieren.

In einer Ausführung wird die Orientierung, insbesondere die Korrekturgröße, zyklisch bzw. in periodischen Abständen ermittelt und/oder ausgegeben.

Wie vorstehend erläutert, bewirkt eine Abweichung zwischen der tatsächlichen aktuellen Gravitationsrichtung und der dem Modell zugrundeliegenden Gravitationsrichtung eine Abweichung zwischen den erfassten Gelenkkräften und auf Basis des Modells des Roboters ermittelten Modell-Gelenkkräften, so dass eine Reduzierung dieser Abweichung zwischen den Gelenkkräften zu einer zunehmenden Angleichung zwischen der tatsächlichen aktuellen Gravitationsrichtung und der dem Modell zugrundeliegenden Gravitationsrichtung führt.

In einer Ausführung wird eine bzw. die Abweichung zwischen der ermittelten Orientierung und einer bzw. der dem Modell zugrundeliegenden Orientierung des Roboters relativ zur Gravitationsrichtung, insbesondere eine bzw. die Abweichung zwischen der ermittelten tatsächlichen Gravitationsrichtung und einer bzw. der dem Modell zugrundeliegenden Gravitationsrichtung relativ zum Roboter und/oder eine bzw. die von der Abweichung zwischen den erfassten Gelenkkräften und den auf Basis des Modells des Roboters ermittelten Modell-Gelenkkräften, insbesondere linear, abhängige, insbesondere mit wachsender Abweichung wachsende, Korrekturgröße, durch Kippen des Roboters, insbesondere seine Roboter(arm)basis und/oder Plattform, um eine, zwei oder mehr, insbesondere zueinander senkrechte und/oder, insbesondere konstruktiv, vorgegebene, Korrekturachsen reduziert, insbesondere minimiert. In einer Weiterbildung wird hierzu die entsprechende Abweichung bzw. Korrekturgröße, insbesondere ihre Richtung und/oder Größe, ausgegeben, insbesondere angezeigt, insbesondere an der Roboter(arm)basis oder Plattform, insbesondere um eine oder mehrere Korrekturachsen, in Form einer Richtung und/oder eines Betrags oder dergleichen.

Dadurch kann in einer Ausführung die Ausrichtung des Roboters korrigiert werden. Dies kann gleichermaßen wenigstens teilweise manuell und/oder wenigstens teilweise automatisiert erfolgen, insbesondere durch Verändern einer oder mehrerer Stützen des Roboters, insbesondere seiner Roboterbasis oder einer Plattform des mobilen Roboters.

In einer Ausführung schließen in einer oder mehreren Messposen (jeweils) eine oder mehrere Bewegungsachsen des Roboters mit einer, insbesondere konstruktiv, vorgegebenen roboterfesten Korrekturachse, um die eine Ausrichtung des Roboters, insbesondere durch Verändern einer oder mehrerer Stützen des Roboters, insbesondere seiner Roboterbasis oder Plattform, korrigierbar ist, einen Winkel ein, der höchstens 30°, insbesondere höchstens 10° beträgt. Mit anderen Worten ist in einer Ausführung in wenigstens einer Messpose wenigstens eine Bewegungsachse des Roboters zu einer Korrekturachse, wenigstens im Wesentlichen, parallel.

In einer Weiterbildung schließen in einer oder mehreren dieser Messposen (jeweils) eine oder mehrere weitere Bewegungsachsen des Roboters mit einer weiteren, insbesondere konstruktiv, vorgegebenen roboterfesten Korrekturachse, um die die Ausrichtung des Roboters, insbesondere durch Verändern einer oder mehrerer Stützen des Roboters, insbesondere seiner Roboterbasis oder Plattform, korrigierbar ist, einen Winkel ein, der ebenfalls höchstens 30°, insbesondere höchstens 10° beträgt. Mit anderen Worten ist in der Weiterbildung in wenigstens einer der Messposen auch wenigstens eine weitere Bewegungsachse des Roboters zu einer weiteren Korrekturachse, wenigstens im Wesentlichen, parallel.

Hierdurch wirken in einer Ausführung vorteilhaft Korrekturen der Ausrichtung des Roboters in der bzw. den roboterfesten Korrekturachsen jeweils direkt auf die bzw. in den hierzu wenigstens im Wesentlichen parallelen Bewegungsachsen bzw. Gelenken des Roboters.

In einer Ausführung beträgt in wenigstens einer Messpose ein horizontaler Abstand zwischen einem bzw. dem distalen Flansch und einer bzw. der Basis des Roboters wenigstens 50%, insbesondere wenigstens 75%, eines maximalen horizontalen Abstandes zwischen dem Flansch und der Basis.

Durch eine solche wenigstens im Wesentlichen waagrechte bzw. horizontale Pose wirken Gewichtskräfte vorteilhaft besonders stark, was die Präzision der ermittelten Orientierung zur Gravitationsrichtung verbessern kann.

In einer Ausführung werden an einem oder mehreren Aufstellorten in einer oder mehreren Messposen jeweils Gelenkkräfte des werkzeuglosen Roboters erfasst und die Orientierung des Roboters zur Gravitationsrichtung auf Basis dieser erfassten Gelenkkräfte und eines Modells des werkzeuglosen Roboters ermittelt und in einer Weiterbildung jeweils die ermittelte Orientierung ausgegeben und/oder die Abweichung zwischen der ermittelten Orientierung und einer dem Modell zugrundeliegenden Orientierung durch Kippen des Roboters um wenigstens eine Korrekturachse reduziert.

Modelle des werkzeuglosen Roboters können vorteilhaft präziser sein. Dies ermöglicht es in einer Ausführung insbesondere, den Roboter bzw. dessen (werkzeugloses) Modell als "absolute" Wasserwaage zu verwenden und ihn somit präzise auszurichten.

Führt der Roboter, insbesondere an seinem (distalen) Flansch, ein, insbesondere lösbar mit dem Flansch verbundenes, Werkzeug, kann dieses in einem Modell des werkzeugführenden Roboters berücksichtigt sein. Führt der Roboter mit seinem Werkzeug, insbesondere Greifer, eine Nutzlast, kann diese analog in einem Modell des nutzlastführenden Roboters berücksichtigt sein.

In einer Weiterbildung kann ein solches Modell an wenigstens einem Aufstellungsort in einer oder mehreren Kalibrierposen kalibriert werden, insbesondere, indem in an sich bekannter Weise aus den Abweichungen zwischen erfassten Gelenkkräften und einem Modell des werkzeug- bzw. nutzlastführenden Roboters die Parameter des Werkzeugs bzw. Modells des werkzeugführenden Roboters bzw. der Nutzlast bzw. des Modells des nutzlastführenden Roboters ermittelt werden.

Entsprechend werden in einer Ausführung zusätzlich oder alternativ an einem oder mehreren weiteren Aufstellorten in einer oder mehreren Messposen jeweils Gelenkkräfte des werkzeug-, insbesondere nutzlastführenden Roboters erfasst und die Orientierung des Roboters zur Gravitationsrichtung auf Basis dieser erfassten Gelenkkräfte und eines Modells des werkzeug-, insbesondere nutzlastführenden Roboters ermittelt und in einer Weiterbildung jeweils die ermittelte Orientierung ausgegeben und/oder die Abweichung zwischen der ermittelten Orientierung und einer dem Modell zugrundeliegenden Orientierung durch Kippen des Roboters um wenigstens eine Korrekturachse reduziert.

Wie einleitend erläutert, wird durch eine Kalibrierung eines Modells des werkzeugführenden, insbesondere nutzlastführenden, Roboters an einem Aufstellungsort eine gegebenenfalls von einer tatsächlichen Ausrichtung bzw. Gravitationsrichtung abweichende Ausrichtung bzw. Gravitationsrichtung, die dem Modell zugrunde liegt, in den Kalibrierposen gleichsam intrinsisch kompensiert. Insbesondere, um auch an einem neuen Aufstellungsort Roboterapplikationen, die auf Basis dieses (intrinsisch kompensierten) Modells parametriert wurden, korrekt auszuführen, werden in einer Ausführung an wenigstens einem Aufstellungsort Parameter des Modells des werkzeugführenden, insbesondere nutzlastführenden, Roboters in einer oder mehreren Kalibrierposen kalibriert und an wenigstens einem weiteren Aufstellungsort die Orientierung des Roboters relativ zur Gravitationsrichtung ermittelt und in einer Weiterbildung jeweils die ermittelte Orientierung ausgegeben und/oder die Abweichung zwischen der ermittelten Orientierung und einer dem kalibrierten Modell zugrundeliegenden Orientierung durch Kippen des Roboters um wenigstens eine Korrekturachse reduziert.

Dadurch kann die Orientierung des Roboter relativ zur tatsächlichen aktuellen Gravitationsrichtung an seinem neuen bzw. weiteren Aufstellungsort, wenigstens im Wesentlichen, der Orientierung an dem Aufstellungsort entsprechen, mit der bzw. an dem das Modell kalibriert worden ist. Somit kann eine auf Basis dieses Modells parametrierte Roboterapplikation an dem neuen bzw. weiteren Aufstellungsort besser ausgeführt werden.

In einer Weiterbildung weicht wenigstens eine der Messposen an einem der neuen bzw. weiteren Aufstellungsorte um höchstens 10%, insbesondere höchstens 1%, eines maximalen Bewegungsbereichs des Roboters von einer Kalibrierpose ab, in der vorab Parameter des Modells des werkzeug-, insbesondere nutzlastführenden Roboters kalibriert wurden. Der maximale Bewegungsbereich und entsprechend die Abweichung bzw. Prozentangaben können sich insbesondere auf kartesische oder Achs- bzw. Gelenkkoordinaten beziehen. Beispielsweise weichen entsprechend in einer Ausführung zwei Messposen, die sich in jeder Gelenkkoordinate um höchstens 10% eines maximalen Wertebereichs dieser Gelenkkoordinate voneinander unterscheiden, um höchstens 10% eines maximalen Bewegungsbereichs des Roboters voneinander ab. Gleichermaßen weichen in einer Ausführung zwei Messposen, die sich in jeder TCP-Koordinate um höchstens 10% eines maximalen Wertebereichs dieser Koordinate voneinander unterscheiden, um höchstens 10% eines maximalen Bewegungsbereichs des Roboters voneinander ab. Hierdurch kann in einer Ausführung die Präzision weiter erhöht werden.

Nach einer Ausführung der vorliegenden Erfindung weist ein Verfahren zur Bestimmung einer Orientierung eines bzw. des Roboters relativ zu einer bzw. der Gravitationsrichtung, die Schritte auf:

- Erfassen einer Gewichtskraft in wenigstens einer Messpose des Roboters mittels eines an dem Roboter, insbesondere einer bzw. der (proximalen Roboter)Basis oder einem bzw. dem (distalen Werkzeug)Flansch des Roboters, angeordneten Kraftsensors; und
- Ermitteln einer Orientierung des Roboters, insbesondere eines roboterfesten Referenzsystems, relativ zur Gravitationsrichtung auf Basis der erfassten Gewichtskraft und einer bekannten Orientierung des Kraftsensors relativ zu dem Roboter.

Somit wird in einer Ausführung nicht der Roboter selber, sondern ein an ihm angeordneter Kraftsensor sozusagen als elektronische Wasserwage verwendet, insbesondere als "absolute" oder "relative" Wasserwage: eine von einem Kraftsensor erfasste Gewichtskraft hängt insbesondere von der Orientierung des Kraftsensors relativ zur bzw. zum tatsächlichen aktuellen Gravitationsrichtung bzw. -vektor $g_{ist}$ ab. Ist bzw. wird die Orientierung des Kraftsensors relativ zu dem Roboter, insbesondere einem roboterfesten Referenzsystem, bekannt, insbesondere vorgegeben und/oder vermessen, kann somit auf Basis einer mittels des Kraftsensors erfassten Gewichtskraft und der bekannten Orientierung des Kraftsensors relativ zu dem Roboter bzw. Referenzsystem auch die Orientierung des Roboters, insbesondere des roboterfesten Referenzsystems, relativ zur bzw. zum tatsächlichen aktuellen Gravitationsrichtung bzw. -vektor ermittelt werden.

In einer Ausführung ist bzw. wird der Kraftsensor zerstörungsfrei lösbar, insbesondere mittels Schraub-, Steck-, Klemm- und/oder Rastverbindung und/oder an einer roboterfesten Kraftsensorhalterung, an dem Roboter befestigt. Hierdurch kann er vorteilhaft bei Nichtbedarf entfernt und so eine Störung des Roboterbetriebs vermieden werden. In einer anderen Ausführung ist bzw. wird der Kraftsensor nichtzerstörungsfrei-lösbar, insbesondere stoffschlüssig, an dem Roboter befestigt. Hierdurch kann seine Lage relativ zu dem Roboter vorteilhaft fixiert werden.

In einer Ausführung erfasst der Kraftsensor eine Gewichtskraft einer robotergeführten Nutzlast bzw. ist hierzu eingerichtet, insbesondere am Flansch oder der Basis des Roboters angeordnet. In einer anderen Ausführung erfasst der Kraftsensor eine Gewichtskraft des nutzlastführenden oder -losen Roboters bzw. ist hierzu eingerichtet, insbesondere an der Basis des Roboters angeordnet.

In einer Ausführung werden mittels des mehrachsigen Kraftsensors Komponenten der Gewichtskraft in mehreren Richtungen erfasst und in einer Weiterbildung hieraus die Orientierung des Kraftsensors bzw. des Roboters, an dem dieser angeordnet ist, relativ zur bzw. zum tatsächlichen aktuellen Gravitationsrichtung bzw. -vektor ermittelt.

In einer anderen Ausführung wird mittels des einachsigen Kraftsensors nur eine Komponente der Gewichtskraft in der Achsrichtung erfasst und in einer Weiterbildung hieraus die Orientierung dieser Achs- bzw. Erfassungsrichtung des Kraftsensors bzw. die Orientierung des Roboters, an dem der Kraftsensor angeordnet ist, relativ zu einer bzw. einem Gravitationsrichtung bzw. -vektor ermittelt, insbesondere einer tatsächlichen aktuellen Gravitationsrichtung oder einer einer Kalibrierung, insbesondere eines bzw. des Modells, zugrundeliegenden Gravitationsrichtung.

In einer Ausführung wird eine Korrekturgröße ermittelt und angezeigt, die von einer aktuellen, auf Basis der erfassten Gewichtskraft ermittelten Orientierung des Roboters relativ zur tatsächlichen Gravitationsrichtung oder einer Abweichung zwischen dieser aktuellen Orientierung und einer Orientierung des Roboters relativ zur tatsächlichen Gravitationsrichtung,, die während einer Kalibrierung des Roboters vorlag, abhängt, insbesondere diese angibt. Hierdurch, insbesondere durch Kippen des Roboters derart, dass diese Abweichung reduziert, insbesondere minimiert, wird, kann eine bei einer Kalibrierung des Roboters vorliegende Orientierung des Roboters (wieder) hergestellt werden.

In einer Ausführung ist der Roboter ein mobiler bzw. transportabler Roboter.

Insbesondere bei mobilen Robotern, die in einer Ausführung wahlweise und/oder sukzessive an unterschiedlichen Aufstellorten aufgestellt werden, ist eine hier beschriebene Ermittlung und gegebenenfalls Ausgabe und/oder Korrektur einer Orientierung vorteilhaft.

In einer Weiterbildung weist der mobile Roboter eine bewegliche, insbesondere verfahrbare, Plattform auf, auf der in einer Weiterbildung seine Roboterbasis, insbesondere zerstörungsfrei oder nicht zerstörungsfrei lösbar, angeordnet ist. Die Plattform kann in einer Ausführung schienengebunden oder frei verfahrbar sein und hierzu in einer Weiterbildung ein oder mehrere Luftkissen, ein oder mehrere antriebslose und/oder ein oder mehrere angetriebene Räder, Rollen oder dergleichen aufweisen.

In einer Ausführung weist der Roboter, insbesondere seine (Arm)Basis und/oder seine Plattform, eine oder mehrere Stützen mit veränderlicher Länge und/oder Stellung auf, durch die seine Ausrichtung gegenüber einer Aufstands- oder Befestigungsfläche des Roboters, insbesondere seiner Basis und/oder seiner Plattform, insbesondere konstruktiv, veränderbar, insbesondere ver- bzw. einstellbar, ist. Durch die verstellbaren Stützen sind in einer Ausführung ein oder mehrere roboterfeste Korrekturachsen konstruktiv vorgegeben.

In einer einfachen Ausführung ist wenigstens eine Stütze, insbesondere manuell bzw. mechanisch, insbesondere durch ein Schraubgewinde, pneumatisch und/oder hydraulisch, ein- bzw. ausfahrbar und/oder schwenkbar.

Nach einer Ausführung ist eine Steuerung zum Steuern eines bzw. des Roboters, insbesondere hard- und/oder software-, insbesondere programmtechnisch, zur Durchführung eines hier beschriebenen Verfahrens eingerichtet und/oder weist auf: Mittel zum Erfassen von Gelenkkräften des, insbesondere werkzeuglosen und/oder werkzeugführenden, insbesondere nutzlastführenden, Roboters in wenigstens einer Messpose; und

Mittel zum Ermitteln einer Orientierung des Roboters relativ zur Gravitationsrichtung auf Basis der erfassten Gelenkkräfte und eines Modells des, insbesondere werkzeuglosen und/oder werkzeugführenden, insbesondere nutzlastführenden, Roboters.

In einer Ausführung weist die Steuerung auf:

Mittel zum Ermitteln der Orientierung auf Basis einer Abweichung zwischen den erfassten Gelenkkräften und auf Basis des Modells des Roboters ermittelten Modell-Gelenkkräften; und/oder

Mittel zum Ermitteln und Ausgeben, insbesondere Anzeigen, der Orientierung relativ zu einer tatsächlichen aktuellen Gravitationsrichtung oder einer dem Modell zugrundeliegenden Gravitationsrichtung, insbesondere einer von der Abweichung zwischen den erfassten Gelenkkräften und auf Basis des Modells des Roboters ermittelten Modell-Gelenkkräften abhängigen Korrekturgröße; und/oder Mittel zum Reduzieren einer Abweichung zwischen der ermittelten Orientierung und einer dem Modell zugrundeliegenden Orientierung, insbesondere einer von der Abweichung zwischen den erfassten Gelenkkräften und auf Basis des Modells des Roboters ermittelten Modell-Gelenkkräften abhängigen Korrekturgröße, durch Kippen des Roboters um wenigstens eine Korrekturachse; und/oder

Mittel zum Kalibrieren von Parametern des Modells des werkzeugführenden, insbesondere nutzlastführenden, Roboters in wenigstens einer Kalibrierpose an wenigstens einem Aufstellungsort, und Mittel zum Ermitteln der Orientierung des Roboters relativ zur der Kalibrierung des Modells zugrundeliegenden Gravitationsrichtung an wenigstens einem weiteren Aufstellungsort.

In einer Ausführung weist die Steuerung auf:

Mittel zum Erfassen einer Gewichtskraft in wenigstens einer Messpose des Roboters mittels eines an dem Roboter, insbesondere einer bzw. der (proximalen Roboter)Basis oder einem bzw. dem (distalen Werkzeug)Flansch des Roboters, angeordneten Kraftsensors; und

Mittel zum Ermitteln einer Orientierung des Roboters, insbesondere eines roboterfesten Referenzsystems, relativ zur Gravitationsrichtung auf Basis der erfassten Gewichtskraft und einer bekannten Orientierung des Kraftsensors relativ zu dem Roboter.

Entsprechend wird bzw. ist in einer Ausführung ein Kraftsensor an dem Roboter, insbesondere einer bzw. der (proximalen Roboter)Basis oder einem bzw. dem (distalen Werkzeug)Flansch des Roboters, angeordnet und in einer Weiterbildung mit der Steuerung signaltechnisch verbunden.

In einer Weiterbildung weist die die Steuerung Mittel zum Ermitteln und Anzeigen einer Korrekturgröße auf, die von einer aktuellen, auf Basis der erfassten Gewichtskraft ermittelten Orientierung des Roboters relativ zur tatsächlichen Gravitationsrichtung oder einer Abweichung zwischen dieser aktuellen Orientierung und einer Orientierung des Roboters relativ zur tatsächlichen Gravitationsrichtung, die während einer Kalibrierung des Roboters vorlag, abhängt, insbesondere diese angibt.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere der Roboter steuern kann.

Unter einem Steuern des Roboters wird vorliegend insbesondere auch ein Regeln verstanden.

In einer Ausführung werden ein oder mehrere Schritte des Verfahrens vollständig oder teilweise automatisiert durchgeführt.

Weitere Vorteile und Merkmale ergeben sich aus den Unteransprüchen und den Ausführungsbeispielen. Hierzu zeigt, teilweise schematisiert,:

Fig. 1:   einen mobilen Roboter mit einer Steuerung nach einer Ausführung der vorliegenden Erfindung; und

Fig. 2:   ein Verfahren nach einer Ausführung der vorliegenden Erfindung.

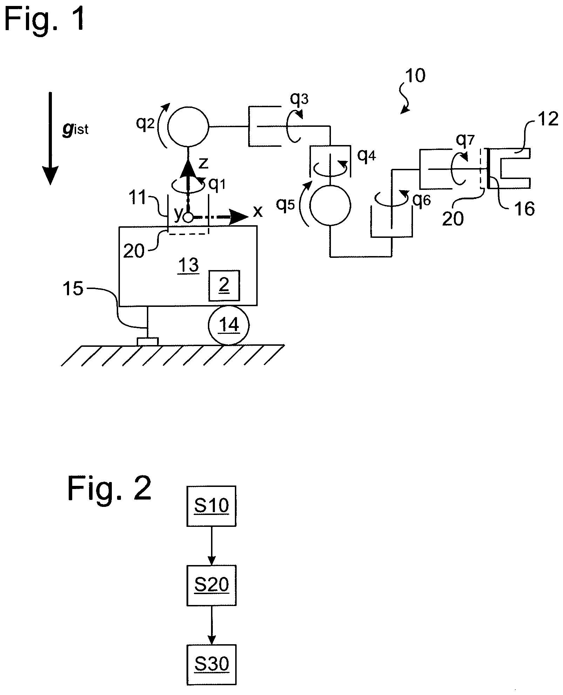

Fig. 1 zeigt einen mobilen Roboter 10 mit einer Steuerung 2 nach einer Ausführung der vorliegenden Erfindung.

Der Roboter weist einen Roboterarm mit einer proximalen Roboterbasis 11 und einem distalen Werkzeugflansch 16 auf, an dem zerstörungsfrei lösbar ein Werkzeug 12 angeordnet ist. Basis 11 und Flansch 16 sind durch sieben aktuierte Drehgelenke beweglich miteinander verbunden, deren Gelenkwinkel mit $q_1,..., q_7$ bezeichnet sind.

In Fig. 1 ist zudem ein roboterbasisfestes Bezugs(koordinaten)system (x, y, z), dessen z-Achse mit der ersten Bewegungsachse (vgl. $q_1$) des Roboters fluchtet, und eine tatsächliche aktuelle Gravitationsrichtung $\boldsymbol{g}_{ist}$ angedeutet.

Der mobile Roboter weist weiter eine verfahrbare Plattform 13 mit exemplarisch zwei Rädern 14 auf, auf der seine Roboterbasis 11 angeordnet ist.

Die Plattform weist exemplarisch zwei Stützen 15 mit veränderlicher Länge auf, durch die eine Ausrichtung des Roboters gegenüber seiner bzw. ihrer Aufstandsfläche veränderbar ist. Im Ausführungsbeispiel sind die Stützen 15 durch ein Schraubgewinde ein- bzw. ausfahrbar. Durch synchrones Ein- bzw. Ausfahren der beiden in Blickrichtung auf Fig. 1 hintereinander liegenden Stützen 15 kann der Roboter 10 bzw. seine Plattform 13 um eine zur y-Achse parallele, konstruktiv vorgegebene roboterfeste Korrekturachse gekippt werden. Durch asynchrones Ein- bzw. Ausfahren der beiden Stützen 15 kann der Roboter 10 bzw. seine Plattform 13 um eine zur x-Achse parallele weitere, konstruktiv vorgegebene roboterfeste Korrekturachse gekippt werden.

Die Steuerung 2 führt, wenigstens teilweise automatisiert, ein nachfolgend mit Bezug auf Fig. 2 erläutertes Verfahren nach einer Ausführung der vorliegenden Erfindung zur Bestimmung einer Orientierung des Roboters 10 relativ zu einer Gravitationsrichtung aus.

Zur absolut gesehen waag- bzw. lotrechten Ausrichtung des Roboters 10 an seinem aktuellen Aufstellungsort werden in einem Schritt S10 in der in Fig. 1 gezeigten Messpose die in den Gelenken wirkenden Gelenkkräfte $\tau_{mess}$ erfasst, wobei das Werkzeug 12 entfernt ist.

In einem Schritt S20 ermittelt die Steuerung 2 aus den Gelenkwinkel $q_1,...,q_7$ auf Basis eines Modells des werkzeuglosen Roboters nach Gleichung (1) Modell-Gelenkkräfte $\tau_{Modell}$ und aus der Abweichung zwischen den erfassten Gelenkkräften $\tau_{mess}$ und den auf Basis dieses Modells ermittelten Modell-Gelenkkräften $\tau_{Modell}$ nach Gleichung (2) eine Orientierung des Roboters relativ zur tatsächlichen aktuellen Gravitationsrichtung $\boldsymbol{g}_{ist}$ bzw. eine von der Abweichung zwischen den erfassten Gelenkkräften $\tau_{mess}$ und auf Basis des Modells des Roboters ermittelten Modell-Gelenkkräften $\tau_{Modell}$ abhängige Korrekturgröße.

Dies lässt sich an Fig. 1 veranschaulichen: am zweiten Gelenk (vgl. $q_2$) wirkt im Wesentlichen die Gewichtskraft der distal dieses Gelenks angeordneten Roboterglieder (rechts in Fig. 1). Das Gelenkmoment im zweiten Gelenk hängt damit vom Gewicht dieser Glieder und dem horizontalen Hebelarm der Gewichtskraft ab. Weicht nun die Orientierung des Roboters 10 bzw. seines Bezugssystems (x, y, z) von der in Fig. 1 gezeigten (idealen) Orientierung ab, die dem Modell zugrunde liegt und in der seine erste bzw. z-Achse antiparallel zur tatsächlichen aktuellen Gravitationsrichtung $\boldsymbol{g}_{ist}$ ist, so ändert sich der tatsächlich wirksame horizontale Hebelarm und damit das Gelenkmoment im zweiten Gelenk entsprechend.

Dieses weicht dann von dem auf Basis des Modells bzw. der ihm zugrundeliegenden Gravitationsrichtung $\boldsymbol{g}_{Modell} = [0,0,-g]^T$ ermittelten Gelenkmoment ab. Entsprechend kann die Steuerung 2 umgekehrt aus dieser Abweichung zwischen dem erfassten Gelenkmoment und dem auf Basis des Modells des Roboters ermittelten Modell-Gelenkmoment die Orientierung des Roboters 10 bzw. seines roboter(basis)festen Bezugssystems (x, y, z) relativ zur tatsächlichen aktuellen Gravitationsrichtung $\boldsymbol{g}_{ist}$ in der (x-z)-Ebene bzw. eine entsprechende Komponente der Korrekturgröße ermitteln.

Analog kann sie auch die Orientierung in der (y-z)-Ebene bzw. eine entsprechende Komponente der Korrekturgröße ermitteln, beispielsweise auf Basis des Gelenkmoments im dritten Gelenk (vgl. $q_3$).

Durch die Berücksichtigung weiterer Gelenkmomente, beispielsweise des Gelenkmoments im fünften Gelenk (vgl. $q_5$) für die Orientierung in der (x-z)-Ebene und/oder des Gelenkmoments im siebten Gelenk (vgl. $q_7$) für die Orientierung in der (x-z)-Ebene, und/oder die Wiederholung der Schritte S10, S20 für weitere, beispielsweise um 90° um die erste Achse (vgl. $q_1$) verdrehte, Messposen kann die Ermittlung redundant erfolgen und so, insbesondere durch Mittelung, ihre Präzision erhöht werden.

In Schritt S30 wird die ermittelte aktuelle Orientierung bzw. Korrekturgröße des Roboters 10 angezeigt, beispielsweise in Form von Winkeln um die x- und y-Achse, um welche die roboterbasisfeste z-Achse bzw. die dem Modell zugrundeliegende Gravitationsrichtung $g_{Modell} = [0,0,-g]^T$ und die tatsächliche aktuelle $g_{ist}$ voneinander abweichen.

Durch Verstellen der (Längen der) Stützen 15 kann der Anwender die Ausrichtung des Roboters 10, insbesondere seiner Plattform 13, so korrigieren, dass die Abweichung zwischen der ermittelten Orientierung und der dem Modell zugrundeliegenden Orientierung bzw. die Korrekturgröße minimiert wird.

Auf diese Weise kann der Roboter 10 absolut waag- bzw. lotrecht ausgerichtet werden.

Gleichermaßen kann auch eine vorhergehende Orientierung des Roboters beim Kalibrieren eines Modells des werkzeugführenden Roboters an einem weiteren Aufstellungsort wieder hergestellt werden: Hierzu wird zunächst dieses Modell an einem Aufstellungsort in an sich bekannter Weise kalibriert, indem verschiedene Kalibrierposen angefahren und in diesen die Gelenkmomente erfasst werden. Aus der Abweichung dieser erfassten Gelenkmomente von auf Basis des Modells ermittelten Gelenkmomenten können Parameter des Modells kalibriert werden.

Auch dies lässt sich an Fig. 1 veranschaulichen: wie vorstehend ausgeführt wirken im zweiten Gelenk die Gewichtskräfte der distalen Roboterglieder. Eine Differenz zwischen dem erfassten Gelenkmoment und dem Gelenkmoment, das auf Basis des Modells des werkzeugführenden Roboters mit einer Werkzeugmasse und einer initialen Schwerpunktlage ermittelt wird, erlaubt beispielsweise in an sich bekannter Weise die, insbesondere iterative, Ermittlung von Masse und Schwerpunktlage in der (x, z)-Ebene.

Wird der Roboter 10 nun an einem weiteren Aufstellungsort aufgestellt, sollte dort seine Orientierung relativ zur tatsächlichen aktuellen Gravitationsrichtung wieder derjenigen entsprechen, die auch bei der vorstehend erläuterten Kalibrierung vorlag. Denn Abweichungen zwischen der tatsächlichen Orientierung und der dem Modell zugrundeliegenden Orientierung bei der Kalibrierung werden intrinsisch bei der Parametrierung von Roboterapplikationen auf Basis des kalibrierten Modells kompensiert. Diese Kompensation sollte entsprechend auch an dem neuen bzw. weiteren Aufstellungsort (wieder) berücksichtigt werden (können).

Entsprechend werden an dem weiteren Aufstellungsort wiederum in Schritten S10 - S30 die in den Gelenken wirkenden Gelenkkräfte $\tau_{mess}$ erfasst (S10), wobei nun wie schon bei der Kalibrierung des Modells des werkzeugführenden Roboters das Werkzeug 12 am Roboterflansch 16 befestigt ist, aus den Gelenkwinkel $q_1,...,q_7$ auf Basis des Modells des werkzeugführenden Roboters nach Gleichung (1) Modell-Gelenkkräfte $\tau_{Modell}$ ermittelt (S20) und eine mehrdimensionale Korrekturgröße mit Komponenten in x- und y-Richtung angezeigt, die beispielsweise linear von der Abweichung zwischen den erfassten Gelenkkräften $\tau_{mess}$ und den Modell-Gelenkkräften $\tau_{Modell}$ abhängt (S30).

Die Korrekturgröße kann beispielsweise in Form von Drehrichtung und/oder -winkel um die x- und y-Achse angezeigt werden. Gleichermaßen kann sie zum Beispiel in Form eines Richtungspfeils in der x-y-Ebene angezeigt werden, in die die z-Achse zu kippen ist, wobei die Größe des Richtungspfeils den Kippwinkel anzeigen kann. Sie kann beispielsweise auch in Form einer Korrekturachse in der x-y-Ebene angezeigt werden, um die die z-Achse zu kippen ist, wobei in einer Weiterbildung der Drehsinn und/oder Kippwinkel angezeigt werden kann, zum Beispiel auch numerisch.

Indem der Anwender durch Ein- oder Ausfahren der Stützen 15 die Ausrichtung der Plattform 13 so ändert, dass die angezeigte Korrekturgröße minimiert wird, stellt er in der neuen bzw. weiteren Aufstellposition wieder dieselbe Orientierung ein, die bei der Kalibrierung des Modells des werkzeugführenden Roboters vorlag.

Auf diese Weise kann das kalibrierte Modell auch in der neuen bzw. weiteren Aufstellposition verwendet werden, insbesondere auch ohne dass der Roboter zur Kalibrierung des Modells absolut waag- bzw. lotrecht ausgerichtet worden ist.

Fig. 1 zeigt eine vorteilhafte Messpose: man erkennt, dass die zweite und fünfte Bewegungsachse des Roboters mit der roboterfesten Korrekturachse y, um die die Ausrichtung des Roboters durch Verändern der Stützen 15 des Roboters korrigierbar ist, einen Winkel einschließen, der 0° beträgt. Hierdurch wirken vorteilhaft Korrekturen der Ausrichtung des Roboters um die y-Achsen direkt auf die zweite und fünfte Bewegungsachse.

Analog schließen die dritte und siebte Bewegungsachse des Roboters mit der weiteren Korrekturachse x, um die die Ausrichtung des Roboters durch Verändern einer der Stützen 15 korrigierbar ist, einen Winkel ein, der ebenfalls 0° beträgt. Hierdurch wirken vorteilhaft Korrekturen der Ausrichtung des Roboters um die x-Achsen direkt auf die dritte und siebte Bewegungsachse.

Zudem beträgt in der Messpose ein horizontaler Abstand zwischen dem distalen Flansch 16 und der Basis 11 des Roboters 100% eines maximalen horizontalen Abstandes zwischen dem Flansch und der Basis, so dass die Gewichtskräfte besonders stark wirken.

In einer Abwandlung ist an der Basis 11 oder dem Flansch 16 ein Kraftsensor in Form einer in Fig. 1 gestrichelt angedeuteten Kraftmessdose 20 angeordnet.

In dieser Abwandlung erfasst die Steuerung 2 in Schritt S10 mittels der (an der Basis angeordneten) Kraftmessdose 20 eine Gewichtskraft des Roboterarms, gegebenenfalls inklusive Nutzlast, oder mittels der (an der Basis oder dem Flansch angeordneten) Kraftmessdose 20 eine Gewichtskraft einer robotergeführten Nutzlast. In einer Ausführung dieser Abwandlung erfasst die mehrachsige Kraftmessdose 20 in Schritt S10 Komponenten $m_x$, $m_y$, $m_z$ der Gewichtskraft m in den drei Richtungen des roboterbasisfesten Bezugskoordinatensystems (x, y, z).

Hieraus ermittelt die Steuerung 2 in Schritt S20 die Orientierung der Kraftmessdose 20 bzw. des Roboters, an dem diese in bekannter Orientierung angeordnet ist, insbesondere die Orientierung seines roboterbasisfesten Bezugskoordinatensystems, relativ zur tatsächlichen aktuellen Gravitationsrichtung, die durch die Richtung des Vektors $[m_x, m_y, m_z]^T$ bestimmt ist. Erfasst beispielsweise die Kraftmessdose 20 nur eine negative Gewichtskraft(komponente) in ihrer z-Achsenrichtung, so ist diese gegensinnig parallel zu der tatsächlichen aktuellen Gravitationsrichtung.

In einer anderen Ausführung dieser Abwandlung erfasst die einachsige Kraftmessdose 20 in Schritt S10 nur eine Komponente $m_z$ der Gewichtskraft m in Achs- bzw. Erfassungsrichtung z des roboterbasisfesten Bezugskoordinatensystems (x, y, z).

Hieraus ermittelt die Steuerung 2 in Schritt S20 die Orientierung der Kraftmessdose 20 bzw. des Roboters, an dem diese in bekannter Orientierung angeordnet ist, relativ zur tatsächlichen aktuellen Gravitationsrichtung. Ist beispielsweise der Betrag $|m|$ der Gewichtskraft $m$ bekannt, so kann aus dem Verhältnis $m_z/|m|$, welches bei Übereinstimmung von Erfassungsrichtung z und tatsächlicher aktueller Gravitationsrichtung den Maximalwert 1 annimmt, die Orientierung ermittelt werden.

In Schritt S30 ermittelt die Steuerung 2 eine Korrekturgröße, die die aktuelle, auf Basis der erfassten Gewichtskraft ermittelte Orientierung des Roboters relativ zur tatsächlichen Gravitationsrichtung angibt, und zeigt diese an, beispielsweise das Verhältnis $m_z/|m|$. Dieses kann der Anwender durch Kippen der Plattform 13 und damit des Roboters 10 minimieren und so den Roboter absolut zur tatsächlichen Gravitationsrichtung ausrichten. Dies ist auch möglich, wenn der Betrag $|m|$ der Gewichtskraft $m$ nicht bekannt ist, da die Komponente $m_z$ einen Extremalwert aufweist, wenn die z-Achsenrichtung der Kraftmessdose bzw. des roboterbasisfesten Bezugskoordinatensystems mit der tatsächlichen aktuellen Gravitationsrichtung übereinstimmt.

Gleichermaßen kann die Korrekturgröße auch die Abweichung zwischen der ermittelten aktuellen Orientierung und einer Orientierung des Roboters relativ zur tatsächlichen Gravitationsrichtung angeben, die während einer Kalibrierung des Roboters vorlag, beispielsweise die Abweichung zwischen den Komponenten $m_x$, $m_y$, $m_z$ der aktuell erfassten Gewichtskraft und den entsprechenden Komponenten, die während einer Kalibrierung des Roboters erfasst wurden. Indem der Anwender durch Kippen der Plattform 13 und damit des Roboters 10 diese (mehrdimensionale) Abweichung minimiert, stellt er wieder die Orientierung her, die während einer Kalibrierung des Roboters vorlag, so dass insbesondere ein dabei kalibriertes Robotermodell wieder korrekt ist.Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| | |
|---|---|
| 10 | Roboter |
| 11 | Basis |
| 12 | Werkzeug |
| 13 | Plattform |
| 14 | Rad |
| 15 | Stütze |
| 16 | Flansch |
| 20 | Kraftmessdose |
| 2 | Steuerung |
| $g_{ist}$ | tatsächliche aktuelle Gravitationsrichtung |
| $q_1,...,q_7$ | Gelenkwinkel |
| (x, y, z) | Bezugssystem |

**Patentansprüche**

**1.** Verfahren zur Korrektur einer Orientierung eines Roboters (10) relativ zur Gravitationsrichtung ($g_{ist}$) an wenigstens einem Aufstellungsort des Roboters, mit den Schritten:

Erfassen (S10) von Gelenkkräften des Roboters in wenigstens einer Messpose; und

Ermitteln (S20) einer Orientierung des Roboters relativ zur Gravitationsrichtung auf Basis der erfassten Gelenkkräfte und eines Modells des Roboters, **dadurch gekennzeichnet, dass**

eine Abweichung zwischen der ermittelten Orientierung und einer dem Modell zugrundeliegenden Orientierung durch Kippen des Roboters um wenigstens eine Korrekturachse (x, y) reduziert wird.

2. Verfahren nach Anspruch 1, **dadurch gekennzeichnet, dass** die Orientierung auf Basis einer Abweichung zwischen den erfassten Gelenkkräften und auf Basis des Modells des Roboters ermittelten Modell-Gelenkkräften ermittelt wird.

3. Verfahren nach einem der vorhergehenden Ansprüche, **dadurch gekennzeichnet, dass** die Orientierung relativ zu einer tatsächlichen aktuellen Gravitationsrichtung ($g_{ist}$) oder einer dem Modell zugrundeliegenden Gravitationsrichtung ermittelt und ausgegeben, insbesondere angezeigt, wird (S30).

4. Verfahren nach einem der vorhergehenden Ansprüche, **dadurch gekennzeichnet, dass** eine von der Abweichung zwischen den erfassten Gelenkkräften und auf Basis des Modells des Roboters ermittelten Modell-Gelenkkräften abhängige Korrekturgröße ermittelt und ausgegeben und/oder durch Kippen des Roboters um wenigstens eine Korrekturachse (x, y) reduziert wird.

5. Verfahren nach einem der vorhergehenden Ansprüche, **dadurch gekennzeichnet, dass** in wenigstens einer Messpose wenigstens eine Bewegungsachse des Roboters mit einer vorgegebenen roboterfesten Korrekturachse (x), um die eine Ausrichtung des Roboters korrigierbar ist, einen Winkel einschließt, der höchstens 30° beträgt.

6. Verfahren nach Anspruch 5, **dadurch gekennzeichnet, dass** in der Messpose wenigstens eine weitere Bewegungsachse des Roboters mit einer weiteren vorgegebenen roboterfesten Korrekturachse (y), um die die Ausrichtung des Roboters korrigierbar ist, einen Winkel einschließt, der höchstens 30° beträgt.

7. Verfahren nach einem der vorhergehenden Ansprüche, **dadurch gekennzeichnet, dass** in wenigstens einer Messpose ein horizontaler Abstand zwischen einem distalen Flansch (16) und einer Basis (11) eines Arms des Roboters wenigstens 50% eines maximalen horizontalen Abstandes zwischen dem Flansch und der Basis beträgt.

8. Verfahren nach einem der vorhergehenden Ansprüche, **dadurch gekennzeichnet, dass** Gelenkkräfte des werkzeuglosen Roboters erfasst werden und das Modell ein Modell des werkzeuglosen Roboters ist.

9. Verfahren nach einem der vorhergehenden Ansprüche, **dadurch gekennzeichnet, dass** Gelenkkräfte des werkzeugführenden, insbesondere nutzlastführenden, Roboters erfasst werden und das Modell ein Modell des werkzeugführenden Roboters ist.

10. Verfahren nach Anspruch 9, **dadurch gekennzeichnet, dass** an wenigstens einem Aufstellungsort Parameter des Modells des werkzeugführenden Roboters in wenigstens einer Kalibrierpose kalibriert werden, und an wenigstens einem weiteren Aufstellungsort die Orientierung des Roboters relativ zur der Kalibrierung des Modells zugrundeliegenden Gravitationsrichtung ermittelt wird.

11. Verfahren nach Anspruch 10, **dadurch gekennzeichnet, dass** wenigstens eine Messpose zur Ermittlung der Orientierung des Roboters relativ zur Gravitationsrichtung an dem weiteren Aufstellungsort und wenigstens eine Kalibrierpose um höchstens 10% eines maximalen Bewegungsbereichs des Roboters voneinander abweichen.

12. Verfahren zur Bestimmung einer Orientierung eines Roboters (10) relativ zu einer Gravitationsrichtung ($g_{ist}$) an wenigstens einem Aufstellungsort des Roboters nach einem der vorhergehenden Ansprüche, mit den Schritten:

Erfassen (S10) einer Gewichtskraft in wenigstens einer Messpose des Roboters mittels eines an dem Roboter, insbesondere einer Basis (11) oder einem Flansch (16) des Roboters, angeordneten Kraftsensors (20); und

Ermitteln (S20) einer Orientierung des Roboters relativ zur Gravitationsrichtung auf Basis der erfassten Gewichtskraft und einer bekannten Orientierung des Kraftsensors relativ zu dem Roboter.

13. Verfahren nach einem der vorhergehenden Ansprüche, **dadurch gekennzeichnet, dass** der Roboter ein mobiler Roboter ist, insbesondere eine bewegliche, insbesondere verfahrbare, Plattform (13) aufweist.

14. Steuerung (2) zum Steuern eines Roboters (10), die zur Durchführung eines Verfahrens nach einem der vorhergehenden Ansprüche eingerichtet ist und aufweist:

> Mittel (2) zum Erfassen von Gelenkkräften des Roboters in wenigstens einer Messpose; und
> Mittel (2) zum Ermitteln einer Orientierung des Roboters relativ zur Gravitationsrichtung auf Basis der erfassten Gelenkkräfte und eines Modells des Roboters.

**15.** Computerprogramm, insbesondere Computerprogrammprodukt mit einem Programmcode, der auf einem von einem Computer lesbaren Medium gespeichert ist, zur Durchführung eines Verfahrens nach einem der vorhergehenden Ansprüche.

**Claims**

**1.** A method of correcting an orientation of a robot (10) relative to the direction of gravity ($g_{ist}$) at at least one installation site of the robot, the method comprising the steps of:

> detecting (S10) joint forces of the robot in at least one measuring pose; and
> determining (S20) an orientation of the robot relative to the direction of gravity on the basis of the detected joint forces and a model of the robot,
> **characterised in that**
> a deviation between the determined orientation and an orientation on which the model is based is reduced by tilting the robot about at least one correction axis (x, y).

**2.** The method according to claim 1, **characterised in that** the orientation is determined on the basis of a deviation between the detected joint forces and model joint forces determined on the basis of the model of the robot.

**3.** The method according to any one of the preceding claims, **characterised in that** the orientation relative to an actual current direction of gravity ($g_{ist}$) or a direction of gravity on which the model is based is determined and output, in particular displayed (S30).

**4.** The method according to any one of the preceding claims, **characterised in that** a correction variable which is dependent on the deviation between the detected joint forces and model joint forces determined on the basis of the model of the robot is determined and output and / or reduced by tilting the robot about at least one correction axis (x, y).

**5.** The method according to any one of the preceding claims, **characterised in that**, in at least one measuring pose, at least one axis of movement of the robot includes an angle with a predetermined correction axis (x) which is fixed with respect to the robot, about which correction axis (x) an orientation of the robot can be corrected, wherein the angle is at most 30°.

**6.** The method according to claim 5, **characterised in that**, in the measuring pose, at least one further axis of movement of the robot includes an angle with a further predetermined correction axis (y) which is fixed with respect to the robot, about which correction axis (y) the orientation of the robot can be corrected, wherein the angle is at most 30°.

**7.** The method according to any one of the preceding claims, **characterised in that**, in at least one measuring pose, a horizontal distance between a distal flange (16) and a base (11) of an arm of the robot is at least 50 percent of a maximum horizontal distance between the flange and the base.

**8.** The method according to any one of the preceding claims, **characterised in that** joint forces of the robot are detected when the robot is not carrying a tool and the model is a model of the robot when it is not carrying a tool.

**9.** The method according to any one of the preceding claims, **characterised in that** joint forces of the robot are detected when it is carrying a tool, in particular when it is carrying a payload, and the model is a model of the robot when it is carrying a tool.

**10.** The method according to claim 9, **characterised in that**, at at least one installation site, parameters of the model of the robot when it is carrying a tool are calibrated in at least one calibration pose, and, at at least one further installation site, the orientation of the robot relative to the direction of gravity on which the calibration of the model is based is determined.

**11.** The method according to claim 10, **characterised in that** at least one measuring pose for determining the orientation of the robot relative to the direction of gravity at the further installation site and at least one calibration pose differ from one another by at most 10 percent of a maximum range of movement of the robot.

**12.** A method of determining an orientation of a robot (10) relative to a direction of gravity ($g_{ist}$) at at least one installation site of the robot according to any one of the preceding claims, the method comprising the steps of:

detecting (S10) a weight force in at least one measuring pose of the robot by means of a force sensor (20) which is arranged on the robot, in particular at a base (11) or a flange (16) of the robot; and
determining (S20) an orientation of the robot relative to the direction of gravity on the basis of the detected weight force and a known orientation of the force sensor relative to the robot.

**13.** The method according to any one of the preceding claims, **characterised in that** the robot is a mobile robot, and in particular that it comprises a movable platform (13), in particular a traversable platform (13).

**14.** A controller (2) for controlling a robot (10), which controller (2) is arranged to carry out a method according to any one of the preceding claims and which comprises:

means (2) for detecting joint forces of the robot in at least one measuring pose; and
means (2) for determining an orientation of the robot relative to the direction of gravity on the basis of the detected joint forces and a model of the robot.

**15.** A computer program, in particular a computer program product with a program code which is stored on a medium which is readable by a computer, for carrying out a method according to any one of the preceding claims.

**Revendications**

**1.** Procédé de correction d'une orientation d'un robot (10) par rapport à la direction de la gravité ($g_{int}$) au niveau d'au moins un emplacement du robot, avec les étapes de :

détection (S10) de forces d'articulation du robot dans au moins une pose de mesure ; et
détermination (S20) d'une orientation du robot par rapport à la direction de la gravité sur la base des forces d'articulation détectées et d'un modèle du robot,
**caractérisé en ce que**
un écart entre l'orientation déterminée et une orientation sous-jacente au modèle est réduit par basculement du robot autour d'au moins un axe de correction (x, y).

**2.** Procédé selon la revendication 1, **caractérisé en ce que** l'orientation est déterminée sur la base d'un écart entre les forces d'articulation détectées et les forces d'articulation du modèle déterminées sur la base du modèle du robot.

**3.** Procédé selon l'une quelconque des revendications précédentes, **caractérisé en ce que** l'orientation est déterminée par rapport à une direction de la gravité actuelle réelle ($g_{int}$) ou d'une direction de la gravité sous-jacente au modèle et émise, en particulier affichée (S30).

**4.** Procédé selon l'une quelconque des revendications précédentes, **caractérisé en ce qu'**une grandeur de correction dépendant de l'écart entre les forces d'articulation détectées et les forces d'articulation du modèle déterminées sur la base du modèle du robot est déterminée et émise et/ou est réduite par basculement du robot autour d'au moins un axe de correction (x, y).

**5.** Procédé selon l'une quelconque des revendications précédentes, **caractérisé en ce que** dans au moins une pose de mesure, au moins un axe de déplacement du robot forme un angle, qui est au maximum de 30°, avec un axe de correction (x) prédéfini fixe par rapport au robot, autour duquel une orientation du robot peut être corrigée.

**6.** Procédé selon la revendication 5, **caractérisé en ce que** dans la pose de mesure, au moins un autre axe de déplacement du robot forme un angle, qui est au maximum de 30°, avec un autre axe de correction (y) prédéfini fixe par rapport au robot, autour duquel une orientation du robot peut être corrigée.

7. Procédé selon l'une quelconque des revendications précédentes, **caractérisé en ce que** dans au moins une pose de mesure, une distance horizontale entre une bride distale (16) et une base (11) d'un bras du robot est d'au moins 50 % d'une distance horizontale maximum entre la bride et la base.

8. Procédé selon l'une quelconque des revendications précédentes, **caractérisé en ce que** des forces d'articulation du robot sans outil sont détectées et le modèle est un modèle du robot sans outil.

9. Procédé selon l'une quelconque des revendications précédentes, **caractérisé en ce que** des forces d'articulation du robot guidant l'outil, en particulier guidant la charge utile, sont détectées et le modèle est un modèle du robot guidant outil.

10. Procédé selon la revendication 9, **caractérisé en ce qu'**au niveau d'au moins un emplacement, des paramètres du modèle du robot guidant l'outil sont calibrés dans au moins une pose de calibrage, et au niveau d'au moins un autre emplacement, l'orientation du robot est déterminée par rapport à la direction de la gravité sous-jacente au calibrage du modèle.

11. Procédé selon la revendication 10, **caractérisé en ce qu'**au moins une pose de mesure pour la détermination de l'orientation du robot par rapport à la direction de la gravité au niveau de l'autre emplacement et au moins une pose de calibrage divergent l'une de l'autre de maximum 10 % d'une zone de déplacement maximum du robot.

12. Procédé de détermination d'une orientation d'un robot (10) par rapport à une direction de la gravité ($g_{int}$) au niveau d'au moins un emplacement du robot selon l'une quelconque des revendications précédentes, avec les étapes de :

   détection (S10) d'une force d'articulation dans au moins une pose de mesure du robot au moyen d'un capteur de force (20) agencé au niveau du robot, en particulier d'une base (11) ou d'une bride (16) du robot ; et détermination (S20) d'une orientation du robot par rapport à la direction de la gravité sur la base de la force d'articulation détectée et d'une orientation connue du capteur de force par rapport au robot.

13. Procédé selon l'une quelconque des revendications précédentes, **caractérisé en ce que** le robot est un robot mobile, en particulier une plateforme (13) mobile, en particulier déplaçable.

14. Commande (2) pour la commande d'un robot (10), qui est aménagée pour la réalisation d'un procédé selon l'une quelconque des revendications précédentes et présente :

   des moyens (2) de détection de forces d'articulation du robot dans au moins une pose de mesure ; et des moyens (2) de détermination d'une orientation du robot par rapport à la direction de la gravité sur la base des forces d'articulation détectées et d'un modèle du robot,

15. Programme informatique, en particulier produit de programme informatique avec un code de programme, qui est enregistré sur un support lisible par un ordinateur, pour la réalisation d'un procédé selon l'une quelconque des revendications précédentes.

# Fig. 1

# Fig. 2

**IN DER BESCHREIBUNG AUFGEFÜHRTE DOKUMENTE**

**In der Beschreibung aufgeführte Patentdokumente**

- EP 0522411 A1
- EP 2639020 A2
- EP 2072194 A2
- DE 10150225 A1